# EUROPÄISCHE PATENTANMELDUNG

(11) **EP 3 301 315 A1**
(43) Veröffentlichungstag der Anmeldung: **04.04.2018**
(21) Anmeldenummer: 16191789.3
(22) Anmeldetag: 30.09.2016
(51) Int. Cl.: F16C 17/02, F16C 33/08, F16C 33/10

(54) **GLEITLAGER, DREHMOMENTWANDLER UND WINDKRAFTANLAGE**

(71) Anmelder: Flender GmbH, 46395 Bocholt (DE)
(72) Erfinder: Meyer, Thomas, 52223 Stolberg (DE)
(74) Vertreter: Maier, Daniel Oliver

(57) **Zusammenfassung**

Gleitlager (1), einen Drehmomentwandler mit einem solchen Gleitlager (1) sowie eine Windkraftanlage mit einem solchen Gleitlager (1) oder einem solchen Drehmomentwandler. Kennzeichnend für das Gleitlager (1) ist es, dass das Gleitlager (1) zumindest ein erstes Gleitlagerteil (1a) und ein zweites Gleitlagerteil (1b) umfasst. Die Gleitlagerteile (1a, 1b) sind ggf. beabstandet, mit einer jeweils zugewandten Stirnseite (9a, 9b) aneinander angeordnet.

Die Gleitlagerteile (1a, 1b) sind auf einem stationären Element (3), beispielhaft einer Achse, befestigbar. Das Gleitlager (1) ist somit in zumindest zwei Gleitlagerteile (1a, 1b) aufgeteilt. Durch die Teilung des Gleitlagers (1) in zwei Gleitlagerteile (1a, 1b) kann das Gleitlager (1) vereinfacht und kostengünstig hergestellt werden. Dies ist insbesondere bei einem sehr großen Gleitlager (1), insbesondere bei einem Durchmesser der Achse ab 20 Zentimeter, vorteilhaft.

## Beschreibung

Die Erfindung betrifft ein Gleitlager, insbesondere ein Radialgleitlager, einen Drehmomentwandler und eine Windkraftanlage.

Gleitlager für große Drehmomentwandler, wie sie insbesondere in Windkraftanlagen oder in der Industrie eingesetzt werden, sind aufwendig zu fertigen. Insbesondere radiale Gleitlager mit großem Innenradius und nur geringfügig größerem Außenradius sind aufwendig zu fertigen.

Gleitlager, insbesondere radiale Gleitlager, sind dem Fachmann bekannt. Beispielhaft zeigt EP 2 383 480 B1 ein Gleitlager.

Weiter zeigt die deutsche Offenlegungsschrift DE 27 02 321 A1 eine Lagerung eines auf einem Bolzen rotierenden Maschinenelements. Das hier beschriebene Gleitlager wird in der Literatur auch als Gleitlagerhülse bezeichnet.

Solche Gleitlager sind aufwendig in der Fertigung, insbesondere bei großen Abmessungen.

Daher ist es Aufgabe der Erfindung, ein Gleitlager bereitzustellen, welches vereinfacht herstellbar ist.

Die Aufgabe wird durch ein Gleitlager, insbesondere ein Radialgleitlager, nach Anspruch 1 gelöst.

Die Aufgabe wird weiter durch einen Drehmomentwandler nach Anspruch 6 und einer Windkraftanlage nach Anspruch 13 gelöst.

Das Gleitlager, insbesondere als radiales Gleitlager ausgebildet, ist mit einer ersten Fläche und einer zweiten Fläche, wobei die erste Fläche zur festen Verbindung mit einen stationären Element ausgebildet ist und die zweite Fläche zur Gleitlagerung eines rotierbaren Elements ausgebildet ist.

Die erste Fläche ist insbesondere eine radiale Innenfläche und die zweite Fläche ist insbesondere eine radiale Außenfläche.

Unter dem Gleitlager wird im Rahmen der Erfindung insbesondere das meist als Gleitlagerhülse bezeichnete Element verstanden.

Kennzeichnend für das Gleitlager ist, dass das Gleitlager ein erstes Gleitlagerteil und zumindest ein zweites Gleitlagerteil umfasst. Hierbei sind das erste Gleitlagerteil und das zweite Gleitlagerteil derart mit dem stationären Element verbunden, dass jeweils eine der Stirnseiten des jeweiligen Gleitlagerteils zueinander zeigend angeordnet ist.

Unter einer ersten Fläche wird bei einem radialen Gleitlager eine radiale Innenfläche des Gleitlagers verstanden.

Unter einer zweiten Fläche wird bei einem radialen Gleitlager die radiale Außenfläche des Gleitlagers verstanden.

Das Gleitlager kann als lineares Gleitlager ausgebildet sein. Das Gleitlager ist vorzugsweise durch eine Auflage auf dem stationären Teil ausgebildet, auf dem das bewegliche, insbesondere linear-bewegliche, Teil gleitet.

Bevorzugt ist das Gleitlager jedoch als radiales Gleitlager ausgeführt.

Die Gleitlagerteile sind regelmäßig in axialer Richtung einander zugewandt.

Das Gleitlager kann bei Anwendung in einem Innenlager durch eine Klebeverbindung oder durch Einschrumpfen in die Öffnung des stationären Elements befestigt sein. Bei Verwendung des Gleitlagers als Innenlager ist das bewegliche oder rotierbare Element eine Welle und das stationäre Element beispielhaft ein Gehäuse oder ein Stator.

Das Gleitlager kann auch als Außenlager ausgebildet sein. Entsprechend der Verwendung kann das stationäre Element dann als eine Achse und das bewegliche Element als Zahnrad oder als Rolle ausgebildet sein, die auf der Achse rotierbar ist.

Bei einem Gleitlager als Außenlager wird bevorzugt das Gleitlager auf das stationäre Element aufgeschrumpft.

Im Folgenden wird das Gleitlager als radiales Außenlager beschrieben. Analog ergeben sich jedoch auch die weiteren, oben genannten Ausführungsformen.

Durch die Zweiteilung des Gleitlagers können die einzelnen Gleitlagerteile jeweils nacheinander auf der Achse positioniert werden. Anstelle von einem zweiteiligen Gleitlager kann auch ein dreiteiliges Gleitlager oder allgemein ein mehrteiliges Gleitlager eine mögliche Ausführung des Gleitlagers sein.

Vorteilhaft an der geteilten Ausführung des hier beschriebenen Gleitlagers ist die vereinfachte Herstellungsmöglichkeit. Je nach Länge des Gleitlagers kann das Gleitlager auch in drei, vier oder mehr Teilen vorliegen. Hierbei werden die Gleitlagerteile analog zu Ringen auf die Achse geschoben und auf der Achse befestigt.

Zur Befestigung der Gleitlagerteile eignet sich besonders gut ein Aufschrumpfen, wobei das jeweilige Gleitlagerteil einen geringfügig kleineren Innenradius als der Außenradius aufweist. Das jeweilige Gleitlagerteil wird erwärmt und auf die Achse geschoben. Nach dem Abkühlen ist das jeweilige Gleitlagerteil fest mit der Achse verbunden.

Durch die hier vorgestellte Ausführung kann eine aufwendige Bearbeitung der Oberflächen, insbesondere der ersten und der zweiten Fläche sowie der Stirnseiten, vereinfacht werden. Überdies ist ein, in Gleitlagerteile geteiltes, Gleitlager mit einer höheren Genauigkeit und mit einer geringeren Dicke vereinfacht herstellbar.

Als Anwendung des Gleitlagers ist insbesondere ein Drehmomentwandler vorgesehen. Das Gleitlager kann jedoch auch im Rahmen einer großen elektrischen Maschine eingesetzt werden.

Der Drehmomentwandler ist insbesondere als Planetengetriebe für eine Windkraftanlage ausgebildet. Der Drehmomentwandler weist ein stationäres Element und ein bewegliches Element auf, wobei das stationäre und das bewegliche Element jeweils mit einer ersten Fläche eines Gleitlagers verbunden sind, wobei das Gleitlager ein erstes Gleitlagerteil und zumindest ein zweites Gleitlagerteil umfasst.

Bei dem stationären Element handelt es sich beispielhaft um eine Achse oder eine feststehende Welle. Bei dem drehbaren oder rotierbaren Element handelt es sich im Rahmen eines Drehmomentwandlers um ein Zahnrad, oder eine weitere Welle, welche auf einer feststehenden Achse rotierbar gelagert ist.

Das stationäre Element kann in einer alternativen Ausführung entgegen der wortsinngemäßen Ausführung um eine Achse rotieren. Relevant für die Erfindung ist lediglich die Rotation bzw. die Bewegung des rotierenden Elements gegenüber dem stationären Element.

Unter einem stationären Element wird verstanden, dass das bewegliche Element gegenüber dem stationären Element bewegbar ausgebildet ist. So kann das stationäre Element als Achse verstanden werden, wobei ein Rad oder Zahnrad in Bezug zur Achse drehbar ausgebildet ist. Stationär heißt daher nicht, dass das stationäre Element raum- oder drehfest sein muss. Beweglich und stationär ist lediglich in Bezug auf das Gleitlager zu verstehen, so dass das Gleitlager lediglich mit dem stationären Element fest verbindbar ist.

Eine mögliche Anwendung der Erfindung ist eine Windkraftanlage mit einem solchen Drehmomentwandler.

Die Windkraftanlage kann jedoch auch an weiteren Stellen durch die Erfindung verbessert werden. Beispielhaft unterstützt ein geteiltes Gleitlager eine Lagerung einer Welle bezüglich eines Stators, wobei die Welle mit einem Windrad der Windkraftanlage verbunden ist. Die Welle dient zur Übertragung der Rotationsbewegung von dem Windrad zu einem Generator. Ein geteiltes Gleitlager ist in einer Windkraftanlage besonders vorteilhaft einsetzbar, da das Gleitlager selbst bei stark schwankenden Drehgeschwindigkeiten zu einer gleichmäßig geringen Gleitreibung zwischen dem stationären Element und dem rotierenden Element aufweist.

Bei einer vorteilhaften Ausgestaltung des Gleitlagers ist das jeweilige Gleitlagerteil aus einem Metall, insbesondere Messing, oder aus einem Kunststoff gefertigt, der eine geringere Festigkeit als ein Baustahl, beispielhaft ST37, aufweist.

Als Kunststoff eignet sich beispielsweise Polytetrafluorethylen (Teflon). Als Metall ist Aluminium, Kupfer, Messung oder eine andere Kupfer- oder Aluminiumlegierung einsetzbar. Bevorzugt werden die Gleitlagerteile aus Bronze gefertigt. In der Regel sind Bauteile eines Drehmomentwandlers, wie eine Achse, Welle oder ein Zahnrad, aus einem einsatzhärtbaren Stahl mit einer hohen Festigkeit gefertigt. Da das Gleitlager oft eine begrenzte Lebensdauer aufweist, und ein Gleitlager leichter zu wechseln ist, als ein anderes Element/Bauteil zu reparieren, führt eine geringere Festigkeit zur verstärkten Abnutzung des Gleitlagers bei gleichzeitiger Schonung des Bauteils/Elements.

Bei einer weiteren vorteilhaften Ausgestaltung des Gleitlagers ist zumindest eines der Gleitlagerteile segmentiert.

Ein Gleitlager kann aus mehreren Teilen bestehen, welche aneinander oder mit dem Element, mit dem das Gleitlager fest verbunden ist, jeweils einzeln verbunden ist. Durch die Segmentierung eines großen Gleitlagers kann die Herstellung des geteilten Gleitlagers weiter vereinfacht werden. Eine Segmentierung findet vorzugsweise in radialer Richtung des Gleitlagers statt. Hierdurch wird ein Hohlzylinder, der schwierig herzustellen ist, durch mehrere Hohlzylinderteile ersetzt. Die Teile werden entweder einzeln oder in ihrer Gesamtheit mit dem stationären Element verbunden. Vorzugsweise werden die einzelnen Gleitlagerteile in der gleichen Art und Weise segmentiert.

Bei einer weiteren vorteilhaften Ausgestaltung des Gleitlagers sind die erste Fläche und die zweite Fläche jeweils eine radiale Fläche.

Es gibt zwei Möglichkeiten für ein Gleitlager: Ein Gleitlager für eine lineare Bewegung (translative Bewegung) und eine Drehbewegung (Rotation). Für eine translative Bewegung ist das Gleitlager bevorzugt als Platte ausgeführt, welche zwischen dem stationären und dem beweglichen Element angeordnet ist.

Bevorzugt wird jedoch ein Gleitlager für Rotationsbewegungen eingesetzt. Ein solches Gleitlager wird auch als Rotationsgleitlager bezeichnet. Bei einem Gleitlager für Rotationsbewegungen ist das Gleitlager bevorzugt durch zwei Hohlzylinder ausgeführt, wobei die Hohlzylinder Stirnseiten aufweisen und jeweils die Stirnseiten zueinander gerichtet sind. Mit anderen Worten sind die Gleitlagerteile so mit dem stationären Element verbunden, dass die Stirnseiten parallel sind. Die zueinander gerichteten Stirnseiten können einander berühren.

Insbesondere für ungleich belastete Gleitlager, welche bei Rotationsbewegungen mit einer niedrigen Drehgeschwindigkeit vorherrschen, ist das hier beschriebene Gleitlager vorteilhaft. Durch die vereinfachte Herstellung der einzelnen Gleitlagerteile können die Gleitlagerteile eine höhere Fertigungsgenauigkeit aufweisen. Eine höhere Genauigkeit äußert sich in einer verminderten Reibung, insbesondere für geringe Rotationsgeschwindigkeiten.

Bei einer weiteren vorteilhaften Ausgestaltung des Gleitlagers weist zumindest eines der Gleitlagerteile eine Schmierstofftasche auf.

Bevorzugt weisen beide Gleitlagerteile jeweils zumindest eine Schmierstofftasche auf. Eine Schmierstofftasche dient der Zuführung eines Schmierstoffs für den Zwischenraum der ersten oder zweiten Fläche des jeweiligen Gleitlagerteils und dem beweglichen Element. Die Schmierstofftasche wird vorteilhaft durch eine Versorgungsleitung in dem stationären Element mit Schmierstoff versorgt.

Bei einer weiteren vorteilhaften Ausgestaltung des Gleitlagers ist zwischen den Stirnseiten der Gleitlagerteile ein Spalt angeordnet.

Der Spalt kann beispielhaft zur Reduktion von Gewicht beitragen. Darüber hinaus kann der Spalt auch zur Schmierstoffversorgung beitragen. Der Spalt kann insbesondere zum Abtransport von Schmierstoff vorgesehen sein, der von den Schmierstofftaschen zwischen das jeweilige Gleitlager und dem beweglichen Element zugeführt wird.

Der Spalt eignet sich weiter zum Transport eines Schmierstoffs, der vom beweglichen Element aufgenommen werden kann.

Bei einer vorteilhaften Ausgestaltung des Drehmomentwandlers ist zwischen einer der, insbesondere radialen, Flächen und dem radialen Gleitlager eine Schmierstoffschicht angeordnet.

Die Schmierstoffschicht dient zur Vermeidung von Reibung zwischen dem Gleitlager und dem beweglichen Element. Regelmäßig ist zwischen dem Gleitlager und dem beweglichen Element ein Zwischenraum angeordnet. Der Zwischenraum kann seitlich durch eine Abdeckung begrenzt sein.

Als Schmierstoff eignet sich Mineralöl, synthetische oder Teilsynthetische Öle oder ein Öl-Wasser-Gemisch.

Durch die Schmierstoffschicht kann die Reibung zwischen den Oberflächen weiter vermindert werden. Eine raue Oberfläche, insbesondere der Fläche des Gleitlagers, ist dann unerheblicher.

Bei einer weiteren vorteilhaften Ausgestaltung des Drehmomentwandlers weist zumindest ein Gleitlagerteil zumindest eine Schmierstofftasche auf.

Zur Versorgung der Schmierstoffschicht mit Schmierstoff sind vorteilhaft Schmierstofftaschen vorgesehen. Eine Schmierstofftasche ist eine flächige Auskerbung des jeweiligen Gleitlagerteils. Die Gleitlagertasche weist eine Öffnung auf, durch die Schmierstoff der Schmierstofftasche bereitgestellt wird. Die Öffnung kann durch eine Schmierstoffversorgung des stationären Elements mit Schmierstoff versorgt werden. So kann der Schmierstoff, der seitlich aus der Schmierstoffschicht austritt, nachgeführt werden. Gegebenenfalls kann der überschüssige Schmierstoff auch durch den Spalt zwischen den Gleitlagerteilen aufgenommen werden und optional durch eine Öffnung in dem stationären Element einem Kreislauf zugeführt werden.

Schmierstofftaschen sind vorzugsweise versetzt oder kollinear zueinander angeordnet. Bevorzugt weist ein Gleitlagerteil jeweils eine oder zwei Schmierstofftaschen auf.

Vorteilhaft eignen sich Schmierstofftaschen sehr gut zur Versorgung der Schmierstoffschicht mit dem Schmierstoff.

Bei einer weiteren vorteilhaften Ausgestaltung des Drehmomentwandlers sind die Gleitlagerteile jeweils an dem stationären Element mit Hilfe eines Schrumpfverfahrens befestigt.

Bei dem Schrumpfverfahren wird in einer Ausgestaltung das jeweilige Gleitlagerteil erwärmt und auf das stationäre Element, beispielhaft um die Achse positioniert, aufgebracht. Durch Abkühlen wird der Innenradius des jeweiligen Gleitlagerteils verringert und somit das jeweilige Gleitlagerteil fest mit dem stationären Element verbunden.

Das bewegliche Element wird ggf. nur auf das jeweilige Gleitlagerteil geschoben.

Bei einer weiteren vorteilhaften Ausgestaltung des Drehmomentwandlers weist zumindest eines der Gleitlagerteile zumindest bereichsweise Einbuchtungen zur Aufnahme eines Schmierstoffs auf.

Das jeweilige Gleitlagerteil weist vorteilhaft eine Einbuchtung auf. Die jeweilige Einbuchtung kann mit einer Öffnung des stationären Elements verbunden sein. Die Öffnung stellt aus einer Leitung, die in dem stationären Element verläuft, den Schmierstoff bereit.

Möglich sind auch weitere Formen der jeweiligen Einbuchtungen. Vorzugsweise weisen die Einbuchtungen eine Tiefe von einigen Millimetern auf. So können die Einbuchtungen selbst als Schmierstoffspeicher dienen und die Reibung zwischen dem beweglichen Element und dem Gleitlager bzw. den Gleitlagerteilen verringern.

Bei einer weiteren vorteilhaften Ausgestaltung des Drehmomentwandlers sind das erste und das zweite Gleitlagerteil an der ersten und/oder zweiten Fläche von einem stationären Element fest umfasst, wobei die jeweilige Fläche des jeweiligen Gleitlagerteils zur Lagerung einer rotierbaren Welle ausgebildet ist.

In dieser Ausführungsform ist das radiale Gleitlager als Innengleitlager für eine drehbare Welle ausgebildet. Insbesondere durch ein oben beschriebenes Schrumpfverfahren (wobei jedoch das jeweilige Gleitlagerteil vor dem Einfügen abgekühlt wird) wird das jeweilige Gleitlagerteil in die Öffnung zur Aufnahme des Gleitlagers eingefügt und mit dem stationären Element fest verbunden.

Durch die vorstehende Ausführung ist auch das häufig vorkommende Innenlager mit einem hohen Innenradius für eine Welle mit hohem Durchmesser vorteilhaft mit einem Gleitlager ausstattbar, wobei das Innenlager vereinfacht herstellbar ist.

In einer weiteren vorteilhaften Ausgestaltung des Drehmomentwandlers sind die Gleitlagerteile jeweils aus einem ersten Werkstoff gefertigt und das stationäre Element und/oder das drehbare Element aus einem zweiten Werkstoff gefertigt, und wobei der erste Werkstoff eine geringere Festigkeit wie der jeweils zweite Werkstoff aufweist.

Durch die Verwendung eines Werkstoffes für das jeweilige Gleitlagerteil mit einer geringeren Festigkeit als der jeweils verwendete Werkstoff für das stationäre/bewegliche Element, geht zumindest ein Teil der Belastung des Drehmomentwandlers auf das Gleitlager über. Das Gleitlager ist im Vergleich zu dem stationären Element bzw. dem beweglichen Element leichter auswechselbar. Darüber hinaus kann das Gleitlager als eine Art Sollbruchstelle dienen, wobei das Gleitlager bei einer hohen Belastung einen Teil der Belastung aufnimmt und die weiteren Elemente des Drehmomentwandlers schont.

Im Folgenden ist die Erfindung anhand von Figuren beschrieben und erläutert. Hierbei stellen die in den FIG ausgeführten Ausführungsformen keine Einschränkungen der Erfindung dar. Darüber hinaus können die gezeigten Merkmale vom Fachmann einzeln zu neuen Ausführungsformen zusammengesetzt werden. Es zeigen:
FIG 1 ein Gleitlager,
FIG 2 eine weitere Darstellung des Gleitlagers,
FIG 3 eine weitere Darstellung des Gleitlagers,
FIG 4 zwei Gleitlagerteile sowie
FIG 5 einen Ausschnitt eines Drehmomentwandlers.

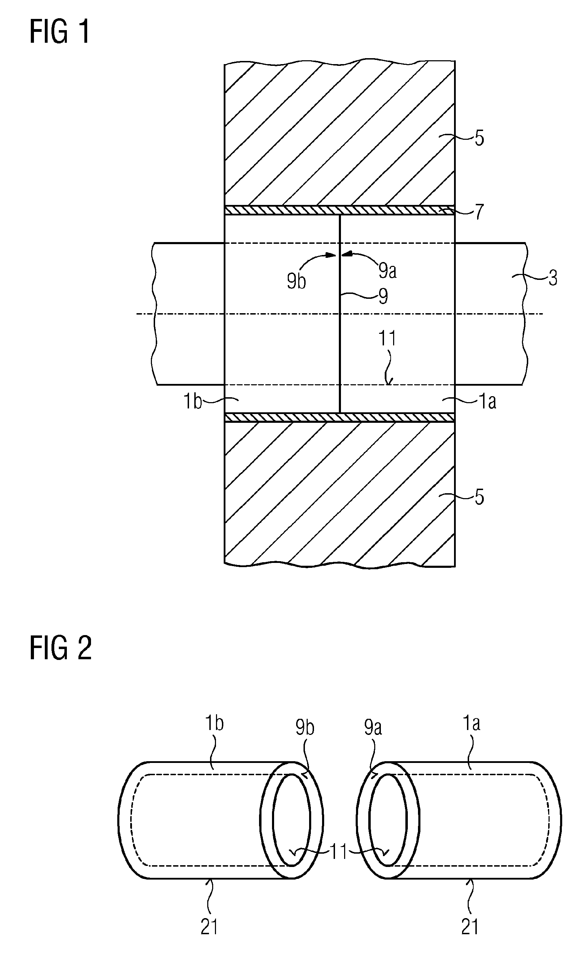

**FIG 1** zeigt ein Gleitlager 1. Das Gleitlager 1 weist ein erstes Gleitlagerteil 1a und ein zweites Gleitlagerteil 1b auf. Die Gleitlagerteile 1a, 1b weisen jeweils eine Stirnseite 9a, 9b auf. Die Stirnseiten 9a, 9b berühren sich in der hier gezeigten Ausgestaltung. Die Gleitlagerteile 1a, 1b sind jeweils auf einem stationären Element 3 angeordnet. Vorzugsweise sind die Gleitlagerteile 1a, 1b auf dem stationären Element 3 aufgeschrumpft oder durch eine sonstige Art und Weise befestigt.

Das stationäre Element 3 ist hier als Achse ausgebildet, wobei die Achse raumfest ist. Das Gleitlager 1 dient zur Lagerung des beweglichen Elements 5. Das drehbare Element kann hier als Rad, insbesondere als Zahnrad, in einem Getriebe ausgebildet sein.

Die Gleitlagerteile 1a, 1b weisen jeweils eine erste Fläche 11 und eine zweite Fläche 21 auf. Die erste Fläche 11 ist als radiale Innenfläche ausgebildet. Die zweite Fläche 21 ist als radiale Außenfläche ausgebildet. Die erste Fläche 11 des jeweiligen Gleitlagerteils 1a, 1b ist mit dem stationären Element 3 fest verbunden. Die Verbindung kann durch eine Klebeschicht oder durch Aufschrumpfen ausgebildet sein. Durch die Verbindung werden die Gleitlagerteile 1a, 1b in ihrer Position und Ausrichtung fixiert. Hier ist gezeigt, dass sich die Stirnseiten 9a, 9b des jeweiligen Gleitlagerteils 1a, 1b berühren. Es ist jedoch auch möglich, dass die Gleitlagerteile 1a, 1b zwischen ihrer jeweils zugewandten Stirnseite 9a, 9b einen Spalt 9 bilden.

An einer radialen Außenseite des jeweiligen Gleitlagerteils 1a, 1b schließt eine Schmierstoffschicht 7 an. Die Schmierstoffschicht 7 ist zwischen der Außenseite des jeweiligen Gleitlagerteils 1a, 1b und dem beweglichen Element 5 lokalisiert.

**FIG 2** zeigt eine weitere Darstellung eines Gleitlagers 1. Hier sind die Gleitlagerteile 1a, 1b mit ihren jeweiligen Stirnseiten 9a, 9b gezeigt. Die Gleitlagerteile 1a, 1b sind jeweils Hohlzylinder-förmig ausgebildet. Das jeweilige Gleitlagerteil 1a, 1b weist jeweils eine erste Fläche 11 und eine zweite Fläche 21 auf. Die erste Fläche 11 ist als radiale Innenfläche ausgebildet. Die zweite Fläche 21 ist als radiale Innenfläche ausgebildet. Die Stirnseiten 9a, 9b sind benachbart parallel angeordnet.

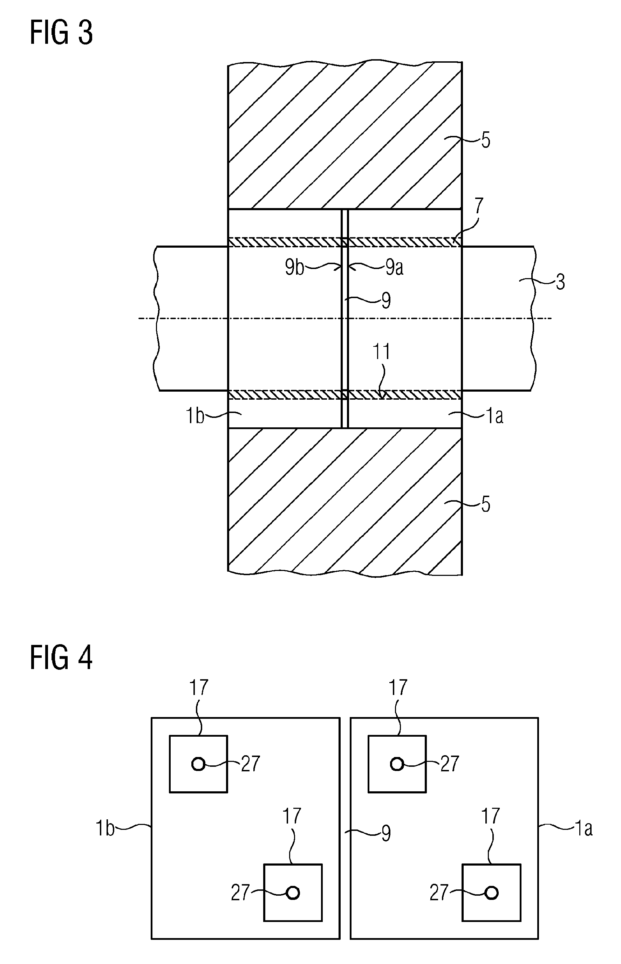

**FIG 3** zeigt eine weitere Darstellung eines Gleitlagers 1. Hier sind die Gleitlagerteile 1a, 1b jeweils in einer Öffnung des stationären Elements 3 befestigt. Die Gleitlagerteile 1a, 1b sind beabstandet in dem stationären Teil befestigt. Zwischen den jeweils einander zugewandten Stirnseiten 9a, 9b ist ein Spalt 9 ausgebildet. Die erste Fläche 11 (als radiale Innenfläche ausgebildet) des jeweiligen Gleitlagerteils 1a, 1b begrenzt eine Schmierstoffschicht 7 von außen. Die Schmierstoffschicht 7 dient zur reibungsarmen Bewegung eines beweglichen Elements 5. Das drehbare Element ist hier als Welle ausgebildet. Die Schmierstoffschicht 7 kann sich auch in den Spalt 9 zwischen den Stirnseiten 9a, 9b der Gleitlagerteile 1a, 1b erstrecken.

**FIG 4** zeigt zwei Gleitlagerteile 1a, 1b. Die Gleitlagerteile 1a, 1b weisen jeweils zwei Schmierstofftaschen 17 auf. Die Schmierstofftaschen 17 weisen jeweils eine Öffnung 27 auf. Die jeweilige Öffnung 27 erstreckt sich in radialer Ausrichtung durch die jeweiligen Gleitlagerteile 1a, 1b hindurch. Die Öffnung 27 dient zur Versorgung der Schmierstofftasche 17 mit dem Schmierstoff. Die Schmierstofftasche 17 dient zur Ausbildung der Schmierstoffschicht 7 zwischen dem jeweiligen Gleitlagerteil 1a, 1b und dem beweglichen Element 5. Die Schmierstofftaschen 17 sind jeweils an der ersten oder zweiten (insbesondere radial ausgebildeten) Fläche 11, 12 angeordnet, an dem die Schmierstoffschicht 7 und/oder das bewegliche Element 5 angrenzen. Zur Aufnahme des überschüssigen Schmierstoffes kann der Spalt 9 dienen, der sich zwischen den jeweils einander zugewandten Stirnseiten erstreckt.

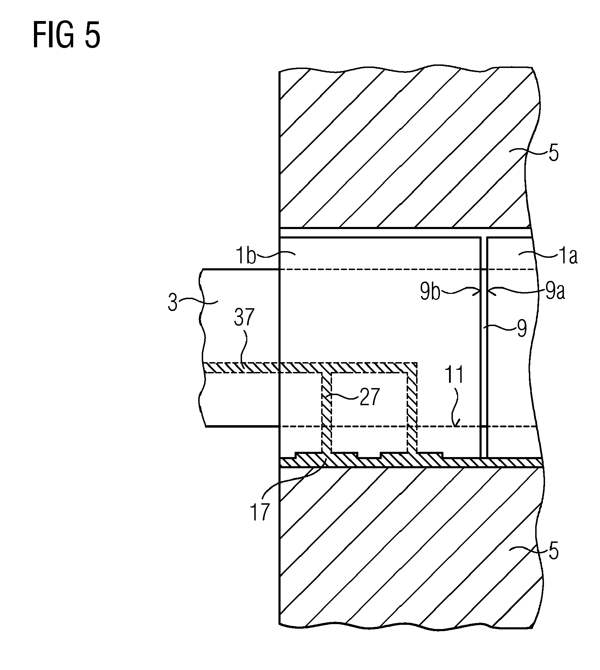

**FIG 5** zeigt einen Ausschnitt eines Drehmomentwandlers. Hier sind die Schmierstofftaschen 17 im Profil gezeigt. Die jeweiligen Öffnungen 27, die der jeweiligen Schmierstofftasche 17 zugeordnet sind, werden von einer Schmierstoffversorgung 37 mit Schmierstoff versorgt. Die Schmierstoffversorgung 37 ist hier als durchgehende Öffnung ausgebildet, die durch das stationäre Element 3 verläuft. Die Schmierstofftaschen 17 stellen den Schmierstoff für die Schmierstoffschicht 7 dar, wobei die Schmierstoffschicht 7 für eine reibungsarme Rotation des beweglichen Elements 5 vorgesehen ist.

Zusammenfassend betrifft die Erfindung ein Gleitlager 1, einen Drehmomentwandler mit einem solchen Gleitlager 1 sowie eine Windkraftanlage mit einem solchen Gleitlager 1 oder einem solchen Drehmomentwandler. Kennzeichnend für das Gleitlager 1 ist es, dass das Gleitlager 1 zumindest ein erstes Gleitlagerteil 1a und ein zweites Gleitlagerteil 1b umfasst. Die Gleitlagerteile 1a, 1b sind ggf. beabstandet, mit einer jeweils zugewandten Stirnseite 9a, 9b aneinander angeordnet. Die Gleitlagerteile 1a, 1b sind auf einem stationären Element 3, beispielhaft einer Achse, befestigbar. Das Gleitlager 1 ist somit in zumindest zwei Gleitlagerteile 1a, 1b aufgeteilt. Durch die Teilung des Gleitlagers 1 in zwei Gleitlagerteile 1a, 1b kann das Gleitlager 1 vereinfacht und kostengünstig hergestellt werden. Dies ist insbesondere bei einem sehr großen Gleitlager 1, insbesondere bei einem Durchmesser der Achse ab etwa 20 Zentimeter, vorteilhaft.

## Patentansprüche

1. Gleitlager, insbesondere Radialgleitlager, mit einer ersten Fläche (11) und einer zweiten Fläche (21), wobei die erste Fläche (11) zur festen Verbindung mit einen stationären Element (3) ausgebildet ist und die zweite Fläche (21) zur Gleitlagerung eines beweglichen Elements (5) ausgebildet ist, **dadurch gekennzeichnet, dass** das Gleitlager (1) ein erstes Gleitlagerteil (1a) und zumindest ein zweites Gleitlagerteil (1b) umfasst und dass das erste Gleitlagerteil (1a) und das zweite Gleitlagerteil (1b) derart mit dem stationären Element (3) verbindbar sind, dass eine Stirnseite (9a, 9b) des ersten Gleitlagerteils (1a) einer Stirnseite (9b) des zweiten Gleitlagerteils (1b) zugewandt ist.

2. Gleitlager (1) nach Anspruch 1, wobei das jeweilige Gleitlagerteil (1a, 1b) aus einem Metall, insbesondere Messing, oder einem Kunststoff gefertigt ist, der eine geringere Festigkeit als ein Baustahl, beispielhaft ST37, aufweist.

3. Gleitlager (1) nach einem der Ansprüche 1 oder 2, wobei zumindest eines der Gleitlagerteile (1a, 1b) segmentiert ist.

4. Gleitlager (1) nach einem der vorangehenden Ansprüche, wobei die erste Fläche (11) und die zweite Fläche (21) jeweils als radiale Fläche ausgebildet sind.

5. Gleitlager (1) nach einem der vorangehenden Ansprüche, wobei zwischen den Stirnseiten (9a, 9b) der Gleitlagerteile (1a, 1b) ein Spalt (9) angeordnet ist.

6. Drehmomentwandler, insbesondere eine Planetengetriebe für eine Windkraftanlage, aufweisend ein stationäres Element (3) und ein bewegliche Element (5), wobei das stationäre Element (3) und das bewegliche Element (5) jeweils mit einer ersten Fläche (11) eines Gleitlagers (1) verbunden sind, wobei das Gleitlager (1) nach einem der vorangehenden Ansprüche, insbesondere gemäß Anspruch 5, ausgebildet ist.

7. Drehmomentwandler nach Anspruch 6, wobei zwischen dem beweglichen Element (5) und dem Gleitlager (1) eine Schmierstoffschicht (7) angeordnet ist.

8. Drehmomentwandler nach einem der Ansprüche 6 oder 7, wobei zumindest eines der Gleitlagerteile (1a, 1b) zumindest eine Schmierstofftasche (17) aufweist.

9. Drehmomentwandler nach einem der Ansprüche 6 bis 8, wobei die Gleitlagerteile (1a, 1b) jeweils auf das stationäre Element (3) mit Hilfe eines Schrumpfverfahrens befestigt sind.

10. Drehmomentwandler nach einem der Ansprüche 6 bis 9, wobei zumindest eines der Gleitlagerteile (1a, 1b) zumindest bereichsweise Einbuchtungen zur Aufnahme eines Schmierstoffs aufweist.

11. Drehmomentwandler nach einem der Ansprüche 6 bis 10, wobei das erste Gleitlagerteil (1a) und das zweite Gleitlagerteil (1b) an einer Außenfläche (11) mit von einem stationären Element (3) fest umfasst ist, wobei die jeweilige Innenfläche (21) des jeweiligen Gleitlagerteils (1a, 1b) zur Lagerung eines beweglichen Elements (5) ausgebildet ist.

12. Drehmomentwandler nach einem der Anspruche 6 bis 11, wobei die Gleitlagerteile (1a, 1b) jeweils aus einem ersten Werkstoff gefertigt und das stationäre Element (3) und/oder das bewegliche Element (5) aus einem zweiten Werkstoff gefertigt sind, und wobei der erste Werkstoff jeweils eine geringere Festigkeit wie der jeweils zweite Werkstoff aufweist.

13. Windkraftanlage, aufweisend einen Drehmomentwandler nach einem der Ansprüche 6 bis 12.
